# DEMANDE DE BREVET EUROPEEN

(11) **EP 0 789 120 A1**
(43) Date de publication de la demande: **13.08.1997**
(21) Numéro de dépôt: 97100671.3
(22) Date de dépôt: 17.01.1997
(51) Int. Cl.: E05B 49/00, B60R 25/04

(54) **Dispositif d'immobilisation d'un véhicule automobile**

(30) Priorité: 30.01.1996 FR 9601256
(71) Demandeur: VALEO SECURITE HABITACLE, 94000 Créteil (FR)
(72) Inventeur: Garnault, Joel, 95110 Sannois (FR)
(74) Mandataire: Gamonal, Didier

(57) **Abrégé**

L'invention propose un dispositif d'immobilisation d'un véhicule automobile du type comportant au moins un verrou mécanique (10) commandé par une clé (12) et un circuit d'immobilisation commandé à distance par un moyen (28) émetteur de signaux de commande agencé dans la tête (24) de la clé (12), la tête (24) de la clé comportant un poussoir (34) de déclenchement de l'émission d'un signal de commande par le moyen émetteur, et le corps du verrou (10) comportant une zone active (40) agencée en regard de la tête (24) de la clé qui agit sur le poussoir (34) lorsque la clé (12) occupe une position déterminée par rapport au verrou (10).

## Description

La présente invention concerne un dispositif d'immobilisation d'un véhicule automobile.

L'invention concerne plus particulièrement un dispositif du type comportant au moins un verrou mécanique commandé par une clé et un circuit d'immobilisation commandé à distance par un moyen émetteur de signaux de commande agencé dans la tête de la clé de verrou.

Selon une conception connue, la neutralisation ou désactivation du circuit d'immobilisation est obtenue par l'envoi d'un signal codé d'identification qui est analysé par le circuit d'immobilisation.

L'envoi du signal codé d'identification peut être effectué au moyen d'un clavier, par télécommande ou au moyen d'un système à transpondeur.

Les aspects ergonomiques sont déterminants pour le choix d'une solution car ils ont une incidence non seulement sur le confort d'utilisation, mais aussi sur la sécurité et la fiabilité du dispositif d'immobilisation dans la mesure où il est nécessaire que l'emploi du code d'identification se fasse de façon naturelle lorsque le conducteur du véhicule essaie de démarrer son véhicule afin qu'il ne se trouve pas gêné lors d'une mise en route rapide pour déplacer le véhicule en urgence.

Une première solution consiste à utiliser la télécommande de verrouillage et de déverrouillage des ouvrants du véhicule. Lors du déverrouillage des portes, le code reçu est envoyé au circuit d'immobilisation qui agit par exemple sur le boitier électronique de contrôle du moteur du véhicule.

Le circuit d'immobilisation est réactivé immédiatement, ou après une courte temporisation, après la coupure du moteur par le conducteur.

Cette solution est particulièrement économique puisqu'elle ne nécessite pas de composants supplémentaires.

Elle n'est toutefois pas entièrement satisfaisante car lorsque le conducteur veut redémarrer son véhicule, sans qu'aucune opération de verrouillage/déverrouillage n'ait eu lieu depuis la dernière coupure du moteur, il ne vient pas naturellement à l'idée du conducteur qu'il lui est nécessaire d'agir à nouveau sur la télécommande pour obtenir une désactivation du circuit d'immobilisation.

D'autres solutions consistent à intégrer dans la tête de la clé un composant électronique du type transpondeur.

Lorsque le conducteur met le contact, le transpondeur est interrogé au moyen d'une antenne agencée autour de la partie du verrou de l'antivol mécanique qui équipe la colonne de direction du véhicule.

Ainsi, la transmission du code en direction du circuit d'immobilisation s'effectue automatiquement et de manière "transparente" pour le conducteur. Cette solution est toutefois excessivement coûteuse, notamment lorsque la tête de la clé est déjà équipée d'une télécommande car il y a alors coexistence, sans effet de synergie, de deux dispositifs électroniques ayant des fonctions équivalentes.

Afin d'obtenir une certaine synergie entre ces dispositifs électroniques, il a aussi été proposé, dans le cas d'une clé équipée d'une télécommande radiofréquence, qu'un signal radioélectrique simple soit émis lors de la mise du contact.

Le circuit électronique contenu dans la tête de la clé détecte ce signal au moyen d'un récepteur simplifié, par exemple un récepteur accordé sur la fréquence émise, et le circuit produit alors un code qui est transmis par le canal d'émission/réception radiofréquence de la télécommande, au circuit d'immobilisation.

L'invention a pour but de proposer un dispositif d'immobilisation perfectionné qui permette de réduire davantage les coûts en exploitant complètement la fonction de télécommande intégrée à la clé du véhicule.

Le document FR-A-2 707 692 illustre un dispositif d'immobilisation du type mentionné précédemment, dans lequel la tête de la clé comporte un poussoir de déclenchement de l'émission d'un signal de commande par le moyen émetteur, le corps du verrou comporte une zone active agencée en regard de la tête de la clé qui agit sur le poussoir lorsque la clé occupe une position déterminée par rapport au verrou.

On comprend qu'avec cet agencement, dès que le conducteur met le contact, il provoque automatiquement, c'est-à-dire sans intervention volontaire et réfléchie de sa part, l'émission par le moyen émetteur contenu dans la tête de la clé d'un signal de commande qui libère le circuit d'immobilisation du véhicule.

Si cette conception est particulièrement économique dans la mesure où elle fait appel au circuit de télécommande incorporé à la tête de la clé, elle nécessite au niveau du verrou une réalisation précise sur le plan dimensionnel de la zone active de manière à ce que le poussoir de déclenchement puisse remplir son rôle.

De manière à s'affranchir des tolérances de fabrication des différents composants, la présente invention propose un dispositif d'immobilisation d'un véhicule automobile du type comportant au moins un verrou mécanique commandé par une clé et un circuit d'immobilisation commandé à distance par un moyen émetteur de signaux de commande agencé dans la tête de la clé, la tête de la clé comportant un poussoir de déclenchement de l'émission d'un signal de commande par le moyen émetteur, le corps du verrou comportant une zone active agencée en regard de la tête de la clé qui agit sur le poussoir lorsque la clé occupe une position déterminée par rapport au verrou, caractérisé en ce que la zone active est formée en relief sur une couronne d'appui pour la tête de la clé qui est montée mobile axialement par rapport au corps du verrou à l'encontre d'un effort élastique de rappel qui plaque un bord transversal annulaire de couronne contre une portion en vis-à-vis de la tête de la clé.

Selon d'autres caractéristiques de l'invention :
- la zone active en relief est un bossage ponctuel ;
- la zone active est constituée par deux bossages ponctuels diamétralement opposés ;
- la zone active en relief est constituée par une nervure en arc de cercle ;
- la couronne comporte une jupe annulaire cylindrique dont un bord d'extrémité libre coopère avec ladite portion en vis-à-vis de la tête de la clé et dont l'autre bord d'extrémité axiale se prolonge radialement par une collerette dont la face transversale annulaire porte ladite zone active formée en relief ;
- le bord d'extrémité libre de la couronne comporte une surépaisseur alignée angulairement avec la zone active en relief, et la distance axiale séparant le sommet de la surépaisseur et le sommet de la zone active en relief détermine la course d'actionnement du poussoir par la zone active en relief ;
- la surépaisseur est constituée par une portion en saillie d'un élément de roulement monté à rotation, dans ledit bord d'extrémité libre, autour d'un axe d'orientation radiale ;
- le verrou appartient à un dispositif antivol de la colonne de direction du véhicule ;
- le moyen émetteur est un émetteur radiofréquence ;
- le moyen émetteur est un émetteur infrarouge, et le corps du verrou comporte un récepteur infrarouge agencé en regard lorsque la clé est dans ladite position déterminée.

D'autres caractéristiques et avantages de l'invention apparaîtront mieux à la lecture de la description qui suit faite à titre d'exemple non limitatif et en référence aux dessins annexés sur lesquels :
- la figure 1 est une vue schématique en perspective qui illustre un verrou d'antivol associé à une clé réalisée suivant l'état de la technique ;
- la figure 2 est une vue schématique latérale de la clé et en bout du verrou permettant d'illustrer le mode de coopération de ces deux composants ;
- la figure 3 est un schéma illustrant les composants de la tête de la clé, cette dernière étant illustrée partiellement introduite axialement dans le verrou ;
- la figure 4 est une vue schématique en perspective qui illustre un verrou d'antivol associé à une clé réalisés conformément au enseignements de l'invention ;
- la figure 5 est une vue similaire à celle de la figure 3 avec le second mode de réalisation du verrou illustré à la figure 4 ; et
- la figure 6 est une vue à plus grande échelle d'un détail de la figure 5.

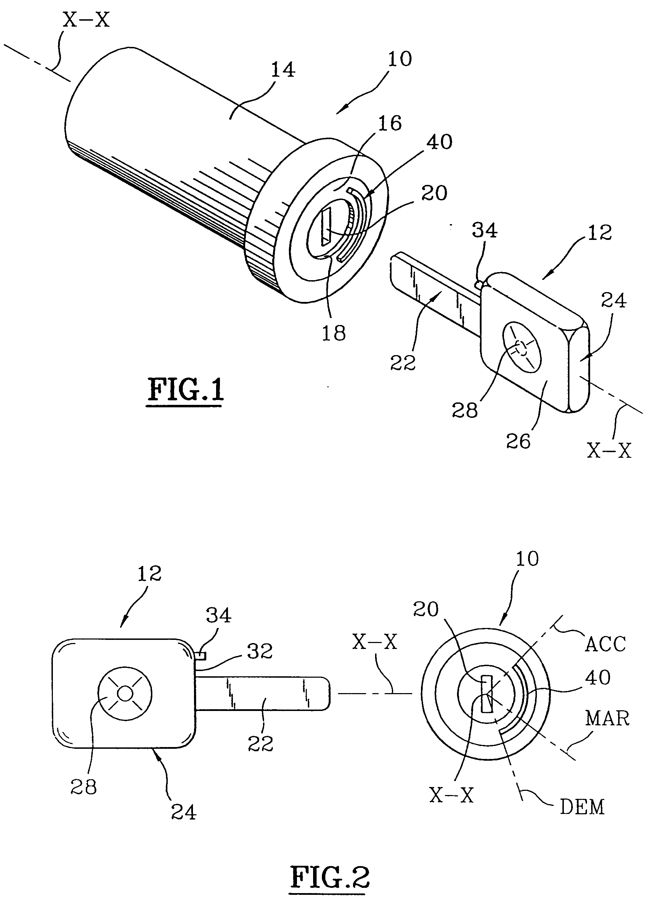

On a représenté aux figures 1 à 3 un verrou 10 qui est par exemple le verrou équipant le dispositif antivol de la colonne de direction d'un véhicule automobile (non représenté) qui est associé à une clé 12 d'actionnement mécanique du verrou.

Le verrou 10 comporte un corps de verrou 14 délimité axialement par une face transversale annulaire avant 16 comportant une ouverture centrale 18 donnant accès à une fente orientée radialement 20 pour l'introduction axiale, selon l'axe X-X, du corps ou panneton 22 de la clé 12.

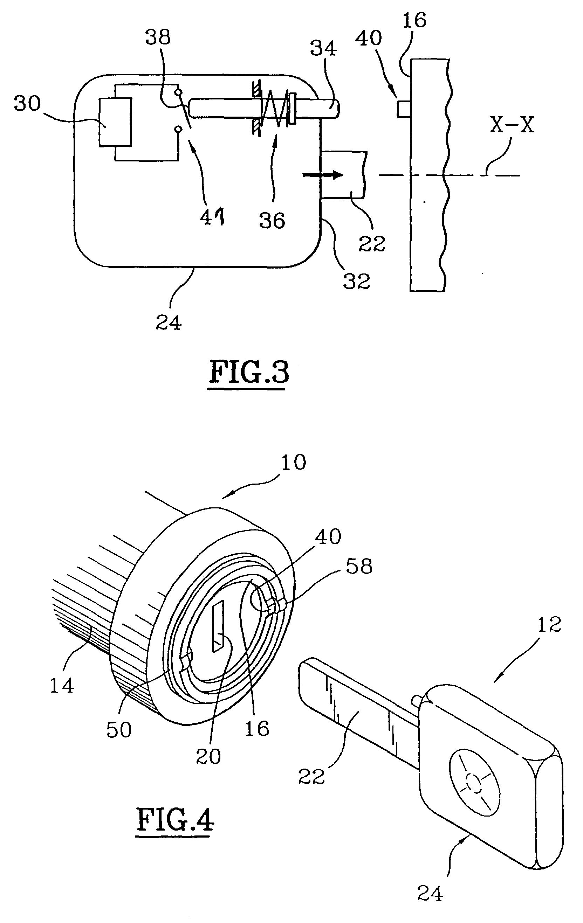

Le corps 22 est associé à une tête 24 de préhension et de manipulation de la clé qui comporte sur une de ses faces latérales principales 26 un bouton poussoir 28 pour l'actionnement d'un circuit électronique 30, schématisé sur la figure 3, qui émet des signaux de commande du type radiofréquence ou par infrarouge, en direction d'un récepteur du véhicule (non représenté) qui est relié à un circuit d'immobilisation du véhicule agissant par exemple sur l'alimentation électrique ou le boîtier électronique du moteur du véhicule.

Dans le mode de réalisation illustré sur les figures, la tête 24 est de forme générale parallélépipédique rectangle et sa face transversale avant 32, qui s'étend dans un plan perpendiculaire à l'axe X-X du corps 22, comporte un poussoir de commande 34 qui est décalé radialement vers l'extérieur par rapport à l'axe X-X et donc par rapport au corps 22.

Le poussoir 34 est monté coulissant axialement, parallèlement à l'axe X-X, entre une position de repos illustrée aux figures 1 à 3 dans laquelle il fait saillie axialement à l'extérieur du corps 24 à travers la face avant 32, position de repos vers laquelle il est rappelé élastiquement par un moyen de rappel 36.

Comme on peut le voir sur la figure 3, l'extrémité libre interne 38 du poussoir 34 est susceptible d'agir sur un commutateur 41 qui est lui-même relié au circuit électronique 30 de la tête 24 de la clé pour provoquer l'émission par ce dernier d'un signal de commande reçu par le récepteur du véhicule relié au circuit d'immobilisation.

Afin d'agir sur le poussoir 34, la face transversale annulaire avant 16 du verrou 10 comporte une nervure 40 qui est formée en relief sur la face 16, c'est-à-dire qui s'étend axialement en direction de la tête 24 de la clé 12.

La nervure 40 occupe une position déterminée en orientation angulaire par rapport à la fente 20 et elle s'étend dans ce mode de réalisation, sur un secteur angulaire déterminé autour de l'axe X-X.

Comme on peut le voir en considérant la figure 2, lorsque la clé 12 est introduite dans le verrou 10 axialement à fond, le poussoir 34 n'est pas en regard de la nervure en relief 40 et les dimensions des différents composants, et notamment du poussoir 34, sont par conception telles que le poussoir 34 n'est pas enfoncé et ne provoque donc pas l'émission d'un signal de commande par le circuit 30.

Par contre, dès que le conducteur tourne la clé dans le verrou 10 pour entraîner en rotation le barillet de ce dernier, dans le sens horaire en considérant la figure 2, le poussoir 34 va rapidement venir en regard de la nervure en relief 40 et va donc être repoussé à l'intérieur de la tête 24 pour provoquer l'émission d'un signal de commande.

Dans l'exemple illustré aux figures 1 à 3, le signal est émis dès que la clé atteint la position angulaire ACC correspondant à l'alimentation électrique des accessoires du moteur du véhicule, et il reste enfoncé sur toute la course angulaire, c'est-à-dire notamment lorsque la clé passe par des positions angulaires MAR correspondant à la mise en marche du moteur et par la position DEM correspondant à l'actionnement du démarreur du véhicule.

On comprend donc aisément que, dès que le conducteur met le contact, il provoque automatiquement, c'est-à-dire sans intervention volontaire et réfléchie de sa part, l'émission par le moyen émetteur contenu dans la tête 24 de la clé 12 d'un signal de commande qui libère le circuit d'immobilisation du véhicule.

Cette conception est particulièrement économique dans la mesure où elle fait appel au circuit de télécommande incorporé à la tête 24 de la clé 12 qui est utilisée par le conducteur, au moyen du bouton poussoir 28, lorsque ce dernier utilise sa clé comme émetteur pour la télécommande d'un signal de verrouillage ou de déverrouillage des ouvrants du véhicule.

On décrira maintenant le mode de réalisation selon l'invention illustré aux figures 4 à 6 sur lesquelles les composants identiques ou similaires à ceux décrits en référence aux figures 1 à 3 sont désignés par les mêmes chiffres de référence.

La clé 12 utilisée pour ce second mode de réalisation est en tout point identique à celle qui a été décrite en référence aux figures 1 à 3.

Par contre, la partie avant du verrou 10 est modifiée.

La face avant 16 du verrou 14 est constituée par une collerette radiale 42 appartenant à une couronne 44 qui est montée mobile axialement par rapport au corps 14 du verrou 10.

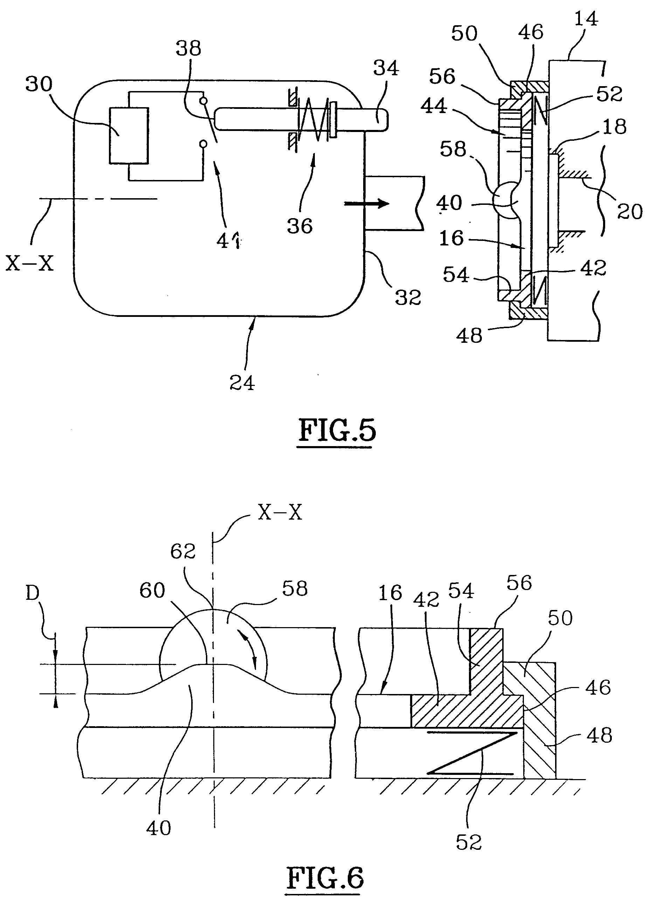

A cet effet, la collerette 42 s'étend radialement vers l'extérieur et son bord radial externe 46 est reçu en coulissement dans une jupe épaulée 48 du corps de verrou 14 afin de pouvoir se déplacer axialement entre sa position de repos illustrée aux figures 4 et 5 dans laquelle elle est en butée contre un épaulement radial interne 50 de la jupe 48 et vers laquelle elle est sollicitée élastiquement par des moyens élastiques tels que des ressorts 52, et une position enfoncée à l'encontre de l'effort de rappel élastique.

Depuis sa position de repos, la couronne 44 est susceptible d'être enfoncée axialement à l'encontre de l'effort exercé par les ressorts 52 en direction du corps de verrou 14.

La couronne 44 est immobilisée en rotation par rapport au verrou 14, c'est-à-dire qu'elle occupe une position angulaire prédéterminée par rapport à celui-ci.

La face transversale annulaire avant 16 de la collerette 42 comporte deux bossages en relief 40 diamétralement opposés qui sont susceptibles, pour une position angulaire déterminée de la clé 12 par rapport au verrou 10, d'agir sur le poussoir 34 afin, comme dans le premier mode de réalisation illustré aux figures 1 à 3, de provoquer l'émission automatique d'un signal en direction du circuit d'immobilisation du véhicule.

La couronne 44 comporte une jupe annulaire cylindrique 54 qui s'étend axialement en direction de la tête 24 de la clé et dont le bord annulaire d'extrémité libre 56 constitue un bord d'appui pour la portion en vis-à-vis de la face transversale avant 32 de la tête 24 de la clé 12.

Grâce à cet agencement selon lequel la couronne 24 peut se déplacer légèrement axialement par rapport au corps de verrou 14, et compte tenu des tolérances de fabrication des différents composants du verrou et de la clé, on garantit la venue en appui de la face transversale avant 32 contre le bord annulaire 56 et donc une position axiale constante de la face 32 par rapport à la couronne 44 et on garantit ainsi une position axiale déterminée et constante du poussoir 34 par rapport à la face annulaire d'extrémité avant 16.

Lorsque le conducteur, après avoir enfoncé la clé, tourne celle-ci par rapport au verrou 10, le poussoir 34 se déplace en regard de la face annulaire avant 16, sans action sur le poussoir, jusqu'à ce que le poussoir 34 rencontre angulairement l'un des deux bossages 40.

Pour faciliter le passage du point dur correspondant à la venue en contact 34 avec un bossage 40, la jupe 54 est équipée de deux éléments de roulement 58 qui sont alignés angulairement avec les bossages 40 et qui sont montés à rotation dans la jupe 54 autour d'axes d'orientation radiale.

Outre qu'il facilite le passage du point dur, cet agencement permet d'obtenir un actionnement précis et avec une course constante du poussoir 34, la course d'actionnement étant déterminée par la distance axiale D séparant le sommet 60 du bossage 40 du sommet 62 de l'élément de roulement 58.

## Revendications

1. Dispositif d'immobilisation d'un véhicule automobile du type comportant au moins un verrou mécanique (10) commandé par une clé (12) et un circuit d'immobilisation commandé à distance par un moyen (28, 30) émetteur de signaux de commande agencé dans la tête (24) de la clé (12), la tête (24) de la clé comportant un poussoir (34) de déclenchement de l'émission d'un signal de commande par le moyen émetteur, le corps du verrou (10) comportant une zone active (40) agencée en regard de la tête (24) de la clé qui agit sur le poussoir (34) lorsque la clé (12) occupe une position déterminée par rapport au verrou (10), caractérisé en ce que la zone active (40) est formée en relief sur une couronne (44) d'appui pour la tête (24, 32) de la clé (12) qui est montée mobile axialement par rapport au corps (14) du verrou (10) à l'encontre d'un effort élastique de rappel qui plaque un bord transversal annulaire (56) de couronne (44) contre une portion en vis-à-vis (32) de la tête (24) de la clé (12).

2. Dispositif selon la revendication 1, caractérisé en ce que la zone active en relief (40) est un bossage ponctuel.

3. Dispositif selon la revendication 1, caractérisé en ce que la zone active est constituée par deux bossages ponctuels (40) diamétralement opposés.

4. Dispositif selon l'une quelconque des revendications précédentes, caractérisé en ce que la couronne (44) comporte une jupe annulaire cylindrique (54) dont un bord d'extrémité libre (56) coopère avec ladite portion (32) en vis-à-vis de la tête (24) de la clé (12) et dont l'autre bord d'extrémité axiale se prolonge radialement par une collerette (42) dont la face transversale annulaire (16) porte ladite zone active formée en relief (40).

5. Dispositif selon la revendication 4, caractérisé en ce que le bord d'extrémité libre (56) de la couronne (44) comporte une surépaisseur (58) alignée angulairement avec la zone active en relief (40), et en ce que la distance axiale (D) séparant le sommet (62) de la surépaisseur (58) et le sommet (60) de la zone active en relief détermine la course d'actionnement du poussoir (34) par la zone active en relief (40).

6. Dispositif selon la revendication 5, caractérisé en ce que la surépaisseur est constituée par une portion en saillie d'un élément de roulement (58) monté à rotation, dans ledit bord d'extrémité libre (56), autour d'un axe d'orientation radiale.

7. Dispositif selon l'une quelconque des revendications précedentes, caractérisé en ce que le verrou (10) appartient à un dispositif antivol de la colonne de direction du véhicule.

8. Dispositif selon l'une quelconque des revendications précédentes, caractérisé en ce que le moyen émetteur est un émetteur radiofréquence.

9. Dispositif selon l'une quelconque des revendications 1 à 7, caractérisé en ce que le moyen émetteur est un émetteur infrarouge, et en ce que le corps du verrou comporte un récepteur infrarouge agencé en regard lorsque la clé est dans ladite position déterminée.
